# EUROPÄISCHE PATENTANMELDUNG

(11) **EP 3 474 240 A1**
(43) Veröffentlichungstag der Anmeldung: **24.04.2019**
(21) Anmeldenummer: 18201442.3
(22) Anmeldetag: 19.10.2018
(51) Int. Cl.: G07C 9/00, B60R 25/24

(54) **VERFAHREN UND SYSTEM ZUR AKTIVIERUNG EINER SICHERHEITSFUNKTION ÜBER EIN EXTERNES GERÄT**

(30) Priorität: 19.10.2017 DE 102017124380
(71) Anmelder: HUF Hülsbeck & Fürst GmbH & Co. KG, 42551 Velbert (DE)
(72) Erfinder: Schindler, Mirko, 42549 Velbert (DE); Neuhoff, Stefan, 45239 Essen (DE); Dennis Steegmann, 42555 Velbert (DE)
(74) Vertreter: Bals, Rüdiger

(57) **Zusammenfassung**

Die Erfindung betrifft ein Verfahren (100) zur Aktivierung einer Sicherheitsfunktion bei einem Sicherheitssystem (5), insbesondere eines Fahrzeuges (1),
**wobei die nachfolgenden Schritte durchgeführt werden:**
a) Ansteuern wenigstens einer Komponente (20) eines tragbaren Geräts (10) als Individualisierungskomponente (20) zur Erzeugung wenigstens einer Geräteinformation (200) über eine gerätefeste Eigenart des tragbaren Geräts (10),
b) Erfassen eines Korrelationssignals (210) durch eine Erfassungskomponente (20), wobei das Korrelationssignal (210) für die wenigstens eine erzeugte Geräteinformation (200) spezifisch ist,
c) Auswerten des erfassten Korrelationssignals (210) zur Bestimmung eines Auswerteergebnisses, um die gerätefeste Eigenart zu identifizieren,
d) Aktivieren der Sicherheitsfunktion in Abhängigkeit von dem Auswerteergebnis.

## Beschreibung

Die vorliegende Erfindung betrifft ein Verfahren zur Aktivierung einer Sicherheitsfunktion bei einem Sicherheitssystem, insbesondere eines Fahrzeuges. Ferner bezieht sich die Erfindung auf ein System sowie ein Computerprogrammprodukt zur Aktivierung der Sicherheitsfunktion.

Es ist aus dem Stand der Technik bekannt, dass Authentifizierungsmittel, wie Identifikationsgeber (ID-Geber, also elektronische Schlüssel) oder auch Smartphones zur Authentifizierung bei einem Fahrzeug genutzt werden können. Besonders komfortabel ist hierbei die Nutzung von Mobilfunkgeräten, wie dem Smartphone, da ein Benutzer ein solches häufig bei sich trägt und damit auf ein zusätzliches Gerät, wie den ID-Geber, verzichten kann. Dies erhöht ferner auch die Sicherheit, da ein Vergessen des ID-Gebers unwahrscheinlicher wird.

Allerdings ist es technisch sehr aufwendig und komplex, die Authentizität des genutzten Mobilfunkgeräts bei der Authentifizierung festzustellen. Denn eine Übertragung eines durch die Daten und/oder Software des Mobilfunkgeräts bereitgestellten Codes kann bspw. durch eine Kopie der Daten und/oder Software auf ein anderes Gerät nachgebildet werden. Damit ist ein Problem bei herkömmlichen Authentifizierungsverfahren, dass die Nutzung eines unbefugt geklonten Mobilfunkgeräts zur Authentifizierung nicht oder nur mit hohem Aufwand verhindert werden kann. Ein besonderes Problem ist, wenn die Software und die Daten des Mobilfunkgeräts vollständig auf ein weiteres Gerät übertragen werden, da hierbei auch ggf. verschlüsselte Informationen ohne Kenntnis des Schlüssels unbefugt genutzt werden können.

Es ist daher eine Aufgabe der vorliegenden Erfindung, die voranstehend beschriebenen Nachteile zumindest tlw. zu reduzieren. Insbesondere ist es eine Aufgabe der Erfindung, eine verbesserte und/oder vereinfachte Möglichkeit zur Aktivierung einer Sicherheitsfunktion bei einem Sicherheitssystem eines Fahrzeuges, z. B. zur Authentifizierung bei einem Fahrzeug, vorzuschlagen, ggf. bei gleichzeitiger Reduzierung der Kosten.

Die voranstehende Aufgabe wird gelöst durch ein Verfahren mit den Merkmalen des unabhängigen Verfahrensanspruchs, ein System mit den Merkmalen des unabhängigen Systemanspruchs sowie durch ein Computerprogrammprodukt mit den Merkmalen des unabhängigen Computerprogrammproduktanspruchs. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen System sowie dem erfindungsgemäßen Computerprogrammprodukt, und jeweils umgekehrt, sodass bezüglich der Offenbarung zu den einzelnen Erfindungsaspekten stets wechselseitig Bezug genommen wird bzw. werden kann.

Die Aufgabe wird insbesondere gelöst durch ein Verfahren zur Aktivierung einer Sicherheitsfunktion, bspw. einer Entriegelung eines Schließsystems eines Fahrzeuges, bei einem Sicherheitssystem, insbesondere des Fahrzeuges.

Das Fahrzeug kann z. B. als Kraftfahrzeug und/oder Personenkraftfahrzeug und/oder Lastkraftfahrzeug und/oder Elektrofahrzeug und/oder Hybridfahrzeug ausgebildet sein. Insbesondere ist das Sicherheitssystem als ein passives Zugangssystem (auch Keyless-Go-System) ausgebildet, bei welchem auf eine aktive manuelle Betätigung eines Identifikationsgebers zur Aktivierung der Sicherheitsfunktion verzichtet werden kann. Insbesondere wird dann eine Authentifizierung und/oder Aktivierung der Sicherheitsfunktion bereits durch die Annäherung an das Fahrzeug ausgelöst.

Es kann bei dem erfindungsgemäßen Verfahren vorgesehen sein, dass ein tragbares Gerät und ein separat davon ausgeführtes externes Gerät genutzt wird. Das tragbare (insbesondere auch mobile) Gerät ist bspw. ein Mobilfunkgerät und/oder ein Smartphone und/oder ein Identifikationsgeber (ID-Geber) und/oder ein Laptop und/oder dergleichen. Das externe Gerät ist z. B. ein Gerät, welches extern und/oder separat und/oder beabstandet vom tragbaren Gerät und/oder vom Fahrzeug ausgebildet ist. Als externes Gerät kommt z. B. eine Datenverarbeitungsanlage, wie ein Computer und/oder Server und/oder dergleichen, in Frage, welcher bevorzugt stationär ausgeführt ist. Dabei ist es denkbar, dass das externe Gerät vernetzt Daten mit dem tragbaren Gerät und/oder dem Fahrzeug austauschen kann. Darunter ist insbesondere zu verstehen, dass die Daten zumindest tlw. über ein Netzwerk, wie ein Daten- und/oder Mobilfunknetz und/oder ein Ethernet und/oder dergleichen, übertragen werden. Entsprechend können zwischen dem externen Gerät und dem tragbaren Gerät auch weite räumliche Entfernungen liegen, sodass das externe Gerät und das tragbare Gerät bspw. mind. 1 km oder mind. 10 km oder mindestens 100 km beabstandet voneinander sein können. Hingegen kann das tragbare Gerät in unmittelbarer Nähe zum Fahrzeug sein, um z. B. das Aktivieren der Sicherheitsfunktion beim Fahrzeug auszulösen. Bspw. muss sich das tragbare Gerät dazu in einem Umkreis von höchstens 4 m oder höchstens 10 m oder höchstens 20 m zum Fahrzeug befinden, und/oder in Funkreichweite (bei einer direkten Funk-, z. B. HF oder LF oder Bluetooth-Kommunikation).

Vorteilhafterweise kann bei einem erfindungsgemäßen Verfahren zumindest einer der nachfolgenden Schritte durchgeführt werden, wobei die Schritte bevorzugt nacheinander oder in beliebiger Reihenfolge durchgeführt werden, und ggf. auch einzelne Schritte wiederholt werden können:
a) Ansteuern wenigstens einer Komponente eines tragbaren Geräts, wie eines Mobilfunkgeräts bzw. Smartphones, als Individualisierungskomponente zur Erzeugung wenigstens einer (insbesondere gerätespezifischen) Geräteinformation über eine gerätefeste (insbesondere identifizierbare, gerätespezifische) Eigenart des tragbaren Geräts,
b) Erfassen (wenigstens) eines Korrelationssignals, insbesondere durch eine Erfassungskomponente, wobei das Korrelationssignal für die wenigstens eine erzeugte Geräteinformation spezifisch ist,
c) Auswerten des erfassten Korrelationssignals zumindest tlw. durch das externe Gerät zur Bestimmung eines Auswerteergebnisses, um die gerätefeste Eigenart zu identifizieren,
d) Aktivieren der Sicherheitsfunktion in Abhängigkeit von dem Auswerteergebnis.

Hierbei ist ein Vorteil, dass das tragbare Gerät durch die gerätefeste Eigenart zuverlässig individualisierbar ist. Dies dient bspw. einer sicheren und zuverlässigen Authentifizierung des tragbaren Geräts als Voraussetzung der Aktivierung der Sicherheitsfunktion bei dem Sicherheitssystem.

Die gerätefeste Eigenart kann ferner eine identifizierbare und gerätespezifische Eigenart des tragbaren Geräts sein, welche insbesondere eine nicht kopierbare Eigenart des tragbaren Geräts ist. In anderen Worten kann auch bei einer vollständigen Kopie der Software und/oder der Daten des tragbaren Geräts auf ein weiteres tragbares Gerät (Klongerät) die gerätefeste Eigenart nicht auf das Klongerät übertragen werden. Die gerätefeste Eigenart kann somit hardwarefest sein, und ist damit untrennbar mit dem tragbaren Gerät verbunden. Das Klongerät weist hingegen eine andere davon abweichende gerätefeste Eigenart auf. In Frage kommen als Eigenart bspw. Geräteanomalien, d. h. herstellungsbedingte Abweichungen von Geräten - auch solchen gleichen Typs - sodass auch Geräte gleichen Typs voneinander verschiedene Eigenarten aufweisen. Damit wird die Sicherheit beim Betrieb des Sicherheitssystems deutlich erhöht, und ein Diebstahl des Authentifizierungsmittels sowie unbefugtes Aktivieren der Sicherheitsfunktion zuverlässig verhindert.

Vorteilhafterweise ist das Korrelationssignal ein Signal, und damit nicht nur eine Information, welche geräteintern verarbeitet wird. Bspw. ist das Korrelationssignal ein extern vom tragbaren Gerät empfangenes Signal, wie ein elektrisches Übertragungssignal und/oder ein Datensignal (z. B. Datenpaket) und/oder ein Funksignal und/oder ein akustisches Signal (z. B. eine Schallwelle) oder ein optisches Signal und/oder dergleichen. Die Erfassung des Korrelationssignals erfolgt dabei bspw. durch das Fahrzeug und/oder durch das externe Gerät (also ein in Bezug auf das tragbare Gerät externes weiteres Gerät). Um eine weitergehende und anpassungsfähige Verarbeitung des Korrelationssignals zu ermöglichen, kann das weitere Gerät (externe Gerät) als Datenverarbeitungsanlage, vorzugsweise als Server, ausgeführt sein, welche insbesondere vernetzt (z. B. auch über eine Datenverbindung eines Mobilfunknetzes und/oder über das Internet) mit dem tragbaren Gerät und/oder dem Fahrzeug verbunden sein kann.

Insbesondere kennzeichnet der Ausdruck "Individualisierungskomponente" wenigstens eine Komponente des tragbaren Geräts als ein Mittel zur Individualisierung des spezifischen tragbaren Geräts, vorzugsweise nur dann, wenn die gerätefeste Eigenart des tragbaren Geräts sich auf diese Komponente auswirkt, und somit eine Auswirkung dieser Komponente das tragbare Gerät gegenüber anderen Geräten individualisierbar macht. Bspw. ist diese (wenigstens eine) Komponente als, ggf. unveränderliche, Hardware-Komponente des tragbaren Geräts ausgebildet. Beispiele für solche Komponenten sind der Prozessor, ein Lautsprecher oder ein Akkumulator oder dergleichen, bei welchen sich geräteindividuelle Anomalien (also die Eigenarten) auf den Betrieb dieser Komponenten auswirken. Bspw. können herstellungs- und/oder alterungsbedingte Abweichungen von Lautsprechern (wie hinsichtlich einer Rauschfrequenz) oder Akkumulatoren (wie hinsichtlich der Kapazität), welche jeweils in unterschiedlichen Geräten (ggf. auch gleichen Typs) verbaut sein können, genutzt werden, um die Geräte voneinander zu unterscheiden. Dabei spielt es auch keine Rolle, wenn es sich jeweils um den gleichen Komponententyp (Lautsprechertyp, Akkumulatortyp) handelt, da auch in diesem Fall toleranzbedingt bei der Herstellung und/oder alterungsbedingt Unterschiede entstehen, welche die Eigenart des Geräts bestimmen.

Die Geräteinformation kann im Rahmen der Erfindung aktiv erzeugt werden, um die Eigenart des Geräts zu identifizieren. So kann eine Komponente des Geräts (wie ein Lautsprecher) zur Ausgabe eines vordefinierten Signals, wie ein Schallsignal, angesteuert werden, um die Geräteinformation zu erzeugen. Eine Abweichung des vordefinierten Signals zum tatsächlich ausgegebenen Signal kann dann nur durch die gerätefeste Eigenart hervorgerufen werden, und die Abweichung ist dann die Geräteinformation über die gerätefeste Eigenart.

Optional kann das tragbare Gerät als Mobilfunkgerät, insbesondere Smartphone, ausgebildet sein. Bevorzugt dient dabei das tragbare Gerät als Identifikationsgeber (ID-Geber) zur Aktivierung der Sicherheitsfunktion und/oder zur Authentifizierung am Fahrzeug. Dabei kann das Gerät dazu ausgeführt sein, ein Wecksignal vom Fahrzeug zu empfangen, um daraufhin die erfindungsgemäßen Schritte (insbesondere die Schritte a) bis d)) durchzuführen. Auch kann es möglich sein, dass die erfindungsgemäßen Schritte manuell initiiert werden.

Die Authentifizierung kann z. B. durch das Auswerten gemäß Schritt c) dadurch erfolgen, dass ein digitaler Code mit einer (vorgespeicherten) Vorlage verglichen wird. Entscheidend kann hierbei sein, dass das Fahrzeug oder ein weiteres externes Gerät, wie eine Datenverarbeitungsanlage, die Authentifizierung und/oder das Auswerten durchführt, um bspw. eine fehlerhafte Authentifizierung durch ein kompromittiertes tragbares Gerät zu vermeiden. Das externe Gerät, insbesondere die Datenverarbeitungsanlage, wie ein oder mehrere Server, kann hierbei als eine Art Vermittler zwischen dem Fahrzeug und dem tragbaren Gerät fungieren. Es ist denkbar, dass eine Datenverbindung, z. B. zumindest tlw. über ein Mobilfunknetz, zwischen dem tragbaren Gerät und dem externen Gerät, insbesondere der Datenverarbeitungsanlage, und/oder dem externen Gerät, insbesondere der Datenverarbeitungsanlage, und dem Fahrzeug hergestellt ist. Dies ermöglicht es, über die Datenverbindung das Korrelationssignal zu übertragen (z. B. zwischen dem tragbaren Gerät und dem externen Gerät) und/oder das Auswerteergebnis zu übertragen (z. B. zwischen dem externen Gerät und dem Fahrzeug), insbesondere unidirektional. Dabei kann das Fahrzeug das Auswerteergebnis empfangen, um zu entscheiden, ob die Sicherheitsfunktion aktiviert werden soll. Alternativ kann es möglich sein, dass bereits das externe Gerät, insbesondere die Datenverarbeitungsanlage, diese Entscheidung trifft, und über die Datenverbindung direkt die Sicherheitsfunktion bei dem Fahrzeug aktiviert, z. B. eine Fahrzeugver- und/oder -entriegelung. Hierzu kann bspw. eine App des tragbaren Geräts bereitgestellt werden, um das Fahrzeug durch einen Benutzer mobil zu verriegeln und/oder entriegeln.

Es ist ferner denkbar, dass das (insbesondere gemäß Schritt b)) erfasste Korrelationssignal vernetzt an das externe Gerät übertragen wird, um (insbesondere gemäß Schritt c)) dieses übertragene erfasste Korrelationssignal auszuwerten, wobei vorzugsweise das Auswerteergebnis vernetzt an das Sicherheitssystem, insbesondere an das Fahrzeug, übertragen wird, um bevorzugt die Sicherheitsfunktion (insbesondere gemäß Schritt d)) in Abhängigkeit von dem übertragenen Auswerteergebnis zu aktivieren. Dabei kann es möglich sein, dass das erfasste Korrelationssignal durch das tragbare Gerät, insbesondere über eine Schnittelle, wie eine Netzwerk- und/oder Mobilfunk- und/oder Funkschnittstelle, vernetzt an das externe Gerät übertragen wird, um dort ausgewertet zu werden. Auch ist es denkbar, dass das externe Gerät wiederum das Auswerteergebnis vernetzt an das Sicherheitssystem, z. B. an das Fahrzeug, bevorzugt an eine Schnittstelle, wie eine Mobilfunkschnittstelle, des Fahrzeuges, überträgt. Dies ermöglicht eine sichere und zuverlässige zentrale Auswertung durch das externe Gerät, wie einem zentralen Sicherheitsserver.

Von Vorteil ist es darüber hinaus bei dem erfindungsgemäßen Verfahren, wenn das externe Gerät als (insbesondere stationäre) Datenverarbeitungsanlage ausgebildet ist. Diese kann ggf. das Auswerten (insbesondere gemäß Schritt c)) durch eine Verarbeitung des Korrelationssignals in Abhängigkeit von wenigstens einer Vergleichsinformation durchführen, wobei bevorzugt die wenigstens eine Vergleichsinformation hierzu durch die Datenverarbeitungsanlage aus einer Datenbank ausgelesen werden. Damit ist es möglich, eine enorme Datenmenge und/oder Rechenleistung für die Auswertung gemäß Schritt c) zur Verfügung zu stellen, um so die Sicherheit und/oder Flexibilität zur Aktivierung von Sicherheitsfunktionen weiter zu erhöhen. So kann das externe Gerät bspw. auch dazu genutzt werden, um die Auswertung für mehrere Sicherheitssysteme (insbesondere verschiedener Fahrzeuge) durchzuführen, wodurch sich ein wichtiger Vorteil der Nutzung des externen Geräts ergibt.

Es kann bspw. eine Datenbank vorgesehen sein, welche wenigstens eine Vergleichsinformation für die Auswertung gemäß Schritt c) bereitstellt. Dabei kann die Datenbank durch das externe Gerät, insbesondere eine Datenverarbeitungsanlage, bereitgestellt werden und/oder durch eine weitere Datenverarbeitungsanlage bereitgestellt werden, welche vernetzt und/oder elektrisch mit dem externen Gerät verbunden ist.

Vorzugsweise kann das externe Gerät, insbesondere als Vorrichtung zur Datenverarbeitung bzw. als Datenverarbeitungsanlage, Mittel umfassen, welche zur Durchführung der nachfolgenden Schritte angepasst sind:
- Optional: Empfangen des Korrelationssignals vom tragbaren Gerät,
- Optional: Kryptografisches Entsichern des empfangenen Korrelationssignals,
- Analyse des Korrelationssignals hinsichtlich Informationen über eine gerätefeste Eigenart des tragbaren Geräts (bspw. durch eine Analysemethode wie eine Mustererkennung) um wenigstens einen Identifikator für die gerätefeste Eigenart zu bestimmen (bspw. ein Muster und/oder eine Signatur und/oder ein Fingerabdruck, welcher für das tragbare Gerät und die gerätefeste Eigenart spezifisch ist),
- Optional: Auslesen wenigstens einer Vergleichsinformation, und Vergleich der Vergleichsinformation mit dem Identifikator, um eine Berechtigung des tragbaren Geräts zur Aktivierung der Sicherheitsfunktion festzustellen, bevorzugt wenn die Vergleichsinformation zumindest zu einem vorbestimmten Anteil mit dem Identifikator übereinstimmt (z. B. zu mind. 80%),
wobei anhand des Identifikators und/oder des Vergleichs das Auswerteergebnis bestimmt wird. Damit kann die Sicherheit weiter erhöht werden, da die sicherheitsrelevanten Auswertungen extern vom tragbaren Gerät durchgeführt werden.

Optional ist es vorgesehen, dass das (insbesondere gemäß Schritt b)) erfasste Korrelationssignal kryptografisch gesichert, vorzugsweise verschlüsselt, an das externe Gerät übertragen wird, und (insbesondere gemäß Schritt c)) dieses übertragene und/oder kryptografisch gesicherte erfasste Korrelationssignal vor der Auswertung kryptografisch entsichert, vorzugsweise entschlüsselt, wird, bevorzugt durch das externe Gerät. Anschließend kann die Auswertung erfolgen, bspw. durch eine Analyse und/oder einen Algorithmus und/oder durch einen Vergleich des Korrelationssignals mit wenigstens einer Vergleichsinformation. Die Vergleichsinformation kann bspw. als Referenz dienen, um ein spezifisches Korrelationssignal eines berechtigten tragbaren Geräts zu identifizieren. In anderen Worten kann anhand der Auswertung (gemäß Schritt c) durch das externe Gerät festgestellt werden, ob das erfasste Korrelationssignal von einem berechtigten tragbaren Gerät verursacht wurde. Es kann also der Vorteil genutzt werden, dass das Korrelationssignal für die Geräteinformation spezifisch ist, welche wiederum von der gerätefesten Eigenart abhängig ist. Nur das berechtigte tragbare Gerät mit einer bestimmten gerätefesten Eigenart kann also zur Erzeugung einer solchen Geräteinformation genutzt werden, welche zur Erfassung des spezifischen Korrelationssignals führt. Bspw. ist die Geräteinformation eine bestimmte Rauschsignatur, welche eine akustische Ausgabe des tragbaren Geräts parasitär überlagert. Allgemein gesprochen kann es sich bei der Geräteinformation also um eine parasitäre Überlagerung von Signalen des tragbaren Geräts handeln, welche aufgrund der gerätefesten Eigenart hervorgerufen werden. Um diese zu identifizieren, kann eine Erfassung dieser Signale erfolgen, aus welcher das Korrelationssignal resultieren kann. Anhand der Auswertung kann dann eine Signatur oder dergleichen aus dem Korrelationssignal extrahiert werden, welches die gerätefeste Eigenart indiziert (wie bspw. ein Muster im Korrelationssignal, welches mittels einer Mustererkennung als Auswertung ermittelt wird). Da nur bestimmte tragbare Geräte zum Aktivieren der Sicherheitsfunktion dienen sollten, kann die wenigstens eine Vergleichsinformation zum Vergleich mit dieser Signatur oder dergleichen dienen, um das berechtige tragbare Gerät zu identifizieren. Eine Übereinstimmung kann bspw. im Auswerteergebnis hinterlegt werden. Anschließend kann das Auswerteergebnis - bevorzugt kryptografisch gesichert - an das Sicherheitssystem übertragen werden, um die Sicherheitsfunktion gemäß Schritt d) in Abhängigkeit von dem übertragenen Auswerteergebnis zu aktivieren.

Darüber hinaus kann nach einer weiteren Möglichkeit bei dem erfindungsgemäßen Verfahren neben dem (insbesondere gemäß Schritt b)) erfassten Korrelationssignal eine Zusatzinformation über das tragbare Gerät und/oder über das Sicherheitssystem an das externe Gerät übertragen werden, wobei vorzugsweise das externe Gerät die Auswertung (gemäß Schritt c) 9) anhand der Zusatzinformation durchführt. Dies kann den Vorteil haben, dass anhand der Zusatzinformation das konkrete Sicherheitssystem (wie ein bestimmtes Fahrzeug) und/oder ein bestimmter Gerätetyp identifiziert werden kann. So kann anhand der Zusatzinformation über das konkrete Sicherheitssystem nur die wenigstens eine Vergleichsinformation ausgelesen werden, welche den tragbaren Geräten (bzw. dem tragbaren Gerät) zugeordnet ist, die zum Aktivieren der Sicherheitsfunktion bei dem konkreten Sicherheitssystem berechtigt sind. In anderen Worten kann das externe Gerät auch zur Auswertung für verschiedene Sicherheitssysteme dienen, welche jeweils unterschiedlichen berechtigten tragbaren Geräte zugeordnet sind. Bspw. ist eine Datenbank vorgesehen, welche entsprechend mehrere Vergleichsinformationen für die unterschiedlichen Sicherheitssystem und unterschiedlichen tragbaren Geräte gespeichert hat. Damit wird eine zentrale Stelle durch das externe Gerät bereitgestellt, um für eine Vielzahl von Sicherheitssystemen (bzw. für eine Vielzahl an Fahrzeugen) die Auswertung selektiv bereitzustellen. Auch ist es möglich, dass die Art des tragbaren Geräts und/oder der Gerätetyp anhand der Zusatzinformation mitgeteilt wird. Dieser kann z. B. genutzt werden, wenn für unterschiedliche tragbare Geräte (Typen und/oder Arten) unterschiedliche Auswertungen durchgeführt werden müssen. Z. B. werden bei einem ersten Gerätetyp erste Geräteinformationen (z. B. über eine parasitäre Anomalie bei der akustischen Ausgabe) und bei einem zweiten Gerätetyp zweite Geräteinformationen (z. B. über eine parasitäre akustische und/oder visuelle Überlagerung bei einer Aktivierung des Vibrationsalarms) ausgewertet, um das Auswerteergebnis zu erhalten. Somit kann anhand der Zusatzinformation auch optional die Art der Auswertung (also die Auswertemethode und/oder Analysemethode) selektiv bestimmt werden.

Ferner kann es im Rahmen der Erfindung möglich sein, dass in Abhängigkeit von einer übertragenen Zusatzinformation das externe Gerät zumindest eine der nachfolgenden Auswahlen durchführt:
- Auswahl einer Schlüsselinformation, welche für das tragbare Gerät und/oder das Sicherheitssystem spezifisch ist, um das Korrelationssignal zu entschlüsseln,
- Auswahl einer kryptografischen Information, welche für das tragbare Gerät und/oder das Sicherheitssystem spezifisch ist, um das Korrelationssignal kryptografisch zu entsichern,
- Auswahl einer Analysemethode, um das Korrelationssignal mittels der ausgewählten Analysemethode auszuwerten,
- Auswahl einer Vergleichsinformation, um das Korrelationssignal anhand der Vergleichsinformationen auszuwerten.
Somit kann auch der Vorteil erzielt werden, dass für unterschiedliche Geräte und/oder Sicherheitssysteme unterschiedliche Verschlüsselungen oder dergleichen genutzt werden, um die Sicherheit weiter zu erhöhen.

Ferner ist möglich, dass ausschließlich extern vom tragbaren Gerät, insbesondere ausschließlich im externen Gerät und/oder durch das Sicherheitssystem, entschieden wird, ob die Sicherheitsfunktion (insbesondere gemäß Schritt d)) aktiviert wird. Diese Entscheidung kann bspw. dadurch erfolgen, dass zunächst bei der Auswertung die gerätefeste Eigenart identifiziert wird (z. B. durch eine Mustererkennung und/oder eine statische Auswertung als Analysemethode), und anschließend diese Identifizierung mit wenigstens einer Vergleichsinformation verglichen wird. Sollte die identifizierte Eigenart (z. B. repräsentiert durch ein erkanntes Muster und/oder eine Signatur) mit der Vergleichsinformation übereinstimmen, kann darauf geschlossen werden, dass es sich um ein berechtigtes tragbares Gerät handelt. Diese Information kann dann als das Auswerteergebnis an das Sicherheitssystem, insbesondere an das Fahrzeug, übertragen werden. Dies hat ferner den Vorteil, dass durch die Bereitstellung der Vergleichsinformationen die berechtigten tragbaren Geräte zentral festgelegt werden können, z. B. auch nachträglich in einfacher Weise an das Sicherheitssystem angelernt werden können (ggf. also unabhängig von dem Fahrzeug). Auch ist es möglich, dass nur ein Zwischenergebnis als Auswerteergebnis an das Sicherheitssystem übertragen wird, z. B. nur die identifizierte Eigenart (wie die Signatur oder das erkannte Muster). Somit obliegt es dem Sicherheitssystem, bspw. einer Fahrzeugelektronik, den Vergleich mit einer Vergleichsinformation durchzuführen, ob es sich dabei um das berechtigte tragbare Gerät handelt. Damit wird die Sicherheit ggf. weiter erhöht.

Darüber hinaus kann es möglich sein, dass das Korrelationssignal (insbesondere gemäß Schritt b)) durch das externe Gerät erfasst wird, wobei die Erfassung gemäß wenigstens einer der nachfolgenden Möglichkeiten erfolgen kann:
- Bestimmen von technischen Charakteristika (wie einer Signatur, eines Musters oder dergleichen) einer Kommunikation, insbesondere einer Datenübertragung, zwischen dem tragbaren Gerät und dem externen Gerät, wobei vorzugsweise die Individualisierungskomponente als eine Komponente des tragbaren Geräts zur Kommunikation, vorzugsweise als eine Mobilfunk- und/oder Netzwerkschnittstelle, ausgebildet ist,
- Bestimmen von technischen Charakteristika eines akustischen Signals, wobei vorzugsweise die Individualisierungskomponente als eine Komponente des tragbaren Geräts zur Aussendung des akustischen Signals (z. B. Lautsprecher oder Vibrationsgeber oder dergleichen) ausgebildet ist,
- Bestimmen von technischen Charakteristika eines optischen Signals, wobei vorzugsweise die Individualisierungskomponente als eine Komponente des tragbaren Geräts zur Aussendung des optischen Signals (z. B. als Bildschirm oder Leuchtdiode oder dergleichen) ausgebildet ist.
Somit kann bspw. auch ein standardisiertes Datenpaket oder dergleichen von dem tragbaren Gerät an das externe Gerät übertragen werden, um anhand von parasitären Auffälligkeiten dieser Übertragung (z. B. Fehlerhäufigkeit oder dergleichen) die gerätefeste Eigenart des sendenden tragbaren Geräts festzustellen.

Vorteilhaft ist es darüber hinaus, wenn im Rahmen der Erfindung bei Schritt a) (und ggf. auch Schritt b) die nachfolgenden Schritte durchgeführt werden:
- Erstes Ansteuern einer ersten Komponente des tragbaren Geräts als eine erste Individualisierungskomponente, vorzugsweise um ein erstes Ergebnis einer ersten Auswertung der ersten Komponente zu erhalten, bspw. einer Funktionsprüfung der ersten Komponente und/oder eines Leistungstests bei der ersten Komponente und/oder dergleichen,
- Zweites Ansteuern wenigstens einer zweiten Komponente des tragbaren Geräts und/oder des externen Geräts als wenigstens eine zweite Individualisierungskomponente, wobei das zweite Ansteuern zumindest tlw. gleichzeitig zum ersten Ansteuern erfolgt, vorzugsweise um zumindest ein zweites Ergebnis einer zweiten Auswertung der zumindest zweiten Komponente zu erhalten, bspw. einer Funktionsprüfung der zweiten Komponente und/oder eines Leistungstests bei der zweiten Komponente und/oder dergleichen,
- Erfassen einer Auswirkung des gleichzeitigen Ansteuerns, insbesondere durch das tragbare Gerät und/oder das externe Gerät und/oder das Fahrzeug, um die Geräteinformation zu erzeugen, insbesondere einer Auswirkung auf ein erstes und/oder zweites Ergebnis und/oder einer Auswirkung auf die Erfassungskomponente (bspw. durch eine Auswertung der Erfassungskomponente gemäß Schritt b), bspw. einer Funktionsprüfung und/oder eines Leistungstests bei der Erfassungskomponente),
und wobei vorzugsweise der nachfolgende Schritt bei Schritt b) durchgeführt wird:
- Ansteuern einer Erfassungskomponente zur Erfassung des Korrelationssignals, wobei das Korrelationssignal für die Überlagerung des ersten und zweiten Ansteuerns spezifisch ist, wobei vorzugsweise die Erfassungskomponente eine Komponente des tragbaren Gerät und/oder des externen Geräts und/oder des Fahrzeuges ist.

Dies hat den Vorteil, dass auch wenigstens eine Geräteinformation anhand von Merkmalen ermittelt werden kann, welche aufgrund der Eigenart des tragbaren Geräts bei einem gleichzeitigen Betrieb von zwei oder mehr Komponenten auftreten. Hierbei können sich z. B. die Individualisierungskomponenten während des Betriebs beeinflussen, sodass aufgrund dieser Beeinflussung wenigstens eine Auswirkung erfassbar, insbesondere messbar, ist. Anhand dieser Auswirkung kann dann die gerätefeste Eigenart besonders zuverlässig identifiziert werden.

Ferner kann es von Vorteil sein, wenn bei Schritt a) die nachfolgenden Schritte durchgeführt werden:
- Ansteuern einer ersten Komponente des tragbaren Geräts als eine erste Individualisierungskomponente zur Erzeugung einer ersten gerätespezifischen Auswirkung,
- Ansteuern wenigstens einer zweiten Komponente des tragbaren Geräts als wenigstens eine zweite Individualisierungskomponente zur Erzeugung wenigstens einer zweiten gerätespezifischen Auswirkung, wobei sich die erste und zweite Auswirkung beeinflussen, sodass eine Überlagerung der ersten und zweiten Auswirkung erfolgt, um die Geräteinformation zu erzeugen,
und/oder wobei der nachfolgende Schritt bei Schritt b) durchgeführt wird:
- Ansteuern der Erfassungskomponente zur Erfassung des Korrelationssignals, wobei das Korrelationssignal für die Überlagerung der ersten und zweiten Auswirkung spezifisch ist.

So kann gemäß einem Beispiel die erste Komponente als ein Prozessor des tragbaren Geräts und die zweite Komponente als ein Vibrationsgeber (insbesondere Vibrationsalarm, z. B. mit einem Motor) des tragbaren Geräts ausgebildet sein. Der Prozessor wird z. B. gemäß einer Vorgabe angesteuert (erstes Ansteuern), wie durch einen festgelegten Algorithmus gemäß einem Benchmark (Geschwindigkeitstest oder dergleichen). Dabei kann die Geschwindigkeit einer Verarbeitung des Prozessors gemessen werden, sodass in diesem Fall die erste Auswirkung die Verarbeitung durch den Prozessor ist. Auch kann z. B. eine Temperatur des Prozessors ermittelt werden, sodass die erste Auswirkung dann die Temperatureinwirkung auf das tragbare Gerät, z. B. einen Temperatursensor des Geräts, ist. Gleichzeitig kann der Vibrationsgeber angesteuert werden (zweites Ansteuern), sodass die zweite Auswirkung eine mechanische Schwingung des tragbaren Geräts ist. Ggf. beeinflusst die mechanische Schwingung die Verarbeitung des Prozessors oder die Temperatureinwirkung, und/oder umgekehrt. Diese Beeinflussung kann dann als Überlagerung der ersten und zweiten Auswirkung verstanden werden, welche z. B. anhand des beeinflussten Temperaturverlaufs oder des ermittelten Benchmark-Ergebnisses als Korrelationssignal erfasst werden kann. Dabei kann das Korrelationssignal auch ein (z. B. an das Fahrzeug oder einen Server) übertragenes Signal bzw. extern vom tragbaren Gerät bspw. durch das Fahrzeug oder den Server erfasstes Signal sein, welches die Information über die Überlagerung umfasst. Dies ermöglicht das Erfassen einer gerätespezifischen Eigenart mit hoher Genauigkeit und Zuverlässigkeit.

Gemäß einem weiteren Vorteil ist das Korrelationssignal ein Signal, welches durch eine Ermittlung, insbesondere Messung, einer Auswirkung der Ansteuerung der wenigstens einen Individualisierungskomponente (gemäß Schritt a)) hervorgerufen und/oder beeinflusst und/oder bestimmt wird. Bspw. kann die Individualisierungskomponente ein Lautsprecher sein, ggf. eine weitere Individualisierungskomponente ein Vibrationsgeber sein (welche gleichzeitig mit dem Lautsprecher angesteuert wird) und die Erfassungskomponente ein Gyrosensor oder ein Mikrofon sein. Die Auswirkung ist dann bspw. eine Auswirkung auf die Erfassung des Gyrosensors oder des Mikrofons. Das Korrelationssignal ist bspw. das durch die Erfassungskomponente erfasste Signal.

Auch ist es denkbar, dass die Erfassungskomponente ein Empfänger (z. B. des Fahrzeuges oder einer Datenverarbeitungsanlage oder eines externen Geräts) ist, um das Korrelationssignal (z. B. als ein Funksignal oder Datensignal) zu empfangen, wobei das Korrelationssignal wenigstens eine Information über die Auswirkung aufweist. Bspw. kann die Auswirkung zuvor durch das mobile Gerät ermittelt worden sein, und dann (ggf. verschlüsselt) über das Korrelationssignal übertragen werden. Bspw. liegt diese Information als ein Korrelationsmerkmal des Korrelationssignals vor. Es kann möglich sein, dass das Korrelationssignal vernetzt von der Datenverarbeitungsanlage oder von dem externen Gerät empfangen wird, bspw. über ein Datennetzwerk, wie ein Mobilfunknetz und/oder Ethernet oder dergleichen.

Es kann weiter vorgesehen sein, dass ein Auswerteergebnis und/oder ein Korrelationsmerkmal und/oder das Korrelationssignal und/oder wenigstens eine Geräteinformation dazu genutzt wird, einen (vorgegebenen) Code zur Authentifizierung bei dem Sicherheitssystem zu verschlüsseln bzw. zu codieren. Insbesondere kann somit ein Authentifizierungsverfahren, welches entsprechende Codes nutzt, durch die Verschlüsselung anhand der genannten Informationen weiter verbessert werden. Anschließend kann der derart verschlüsselte Code an das Fahrzeug oder ein externes Gerät übertragen werden.

Ferner kann im Rahmen der Erfindung vorgesehen sein, dass das Ansteuern gemäß Schritt a) in Abhängigkeit von einer (vorgespeicherten) Vorgabe erfolgt, und bei Schritt c) der nachfolgende Schritt durchgeführt wird:
- Auswerten des erfassten Korrelationssignals dadurch, dass eine Abweichung des Korrelationssignals zur Vorgabe identifiziert wird, insbesondere anhand wenigstens einer Vergleichsinformation, um vorzugsweise ein Korrelationsmerkmal des Korrelationssignals zu bestimmen, wobei bevorzugt das Korrelationsmerkmal mit der gerätefesten Eigenart korreliert ist,
und dass vorzugsweise bei Schritt d) der nachfolgende Schritt durchgeführt wird:
- Aktivieren der Sicherheitsfunktion in Abhängigkeit von dem Korrelationsmerkmal des Korrelationssignals, z. B. durch eine Auswertevorrichtung und/oder ein Steuergerät des Fahrzeuges, wobei vorzugsweise das Aktivieren durch das Fahrzeug und/oder durch das tragbare Gerät erfolgt.

Bspw. unterscheidet sich das Korrelationssignal, z. B. ein durch ein Mikrofon oder ein Gyrosensor erfasstes Signal, nur geringfügig von einem erwarteten Korrelationssignal. Das erwartete Korrelationssignal ist ein solches, bei welchem keine Eigenart des Geräts vorhanden ist, also ein ideales und ggf. vorhersagbares Signal. Um nun dennoch die geringen Unterschiede zur Identifizierung der gerätefesten Eigenart zu nutzen, kann ein solches Korrelationsmerkmal bestimmt werden. Hierzu können ggf. verschiedene Methoden genutzt werden, wie eine statistische Auswertung und/oder Analyse und/oder Mustererkennung und/oder dergleichen, bspw. bei der Auswertung gemäß Schritt c). Somit wird ein besonders zuverlässiges Verfahren zur Aktivierung der Sicherheitsfunktion bereitgestellt.

Bspw. kann es vorgesehen sein, dass bei Schritt a) die nachfolgenden Schritte durchgeführt werden:
- Ansteuern einer ersten Komponente des tragbaren Geräts als eine erste Individualisierungskomponente zur Aussendung eines ersten Signals, um eine erste Geräteinformation zu erzeugen,
- Ansteuern wenigstens einer zweiten Komponente des tragbaren Geräts als wenigstens eine zweite Individualisierungskomponente zur Aussendung wenigstens eines zweiten Signals, um wenigstens eine zweite Geräteinformation zu erzeugen, wobei das zweite Signal in einem Wirkbereich zum ersten Signal ausgesendet wird, und wobei vorzugsweise der nachfolgende Schritt bei Schritt b) durchgeführt wird:
- Ansteuern der Erfassungskomponente zur Erfassung des Korrelationssignals im Wirkbereich, wobei das Korrelationssignal für das erste Signal und das wenigstens zweite Signal, insbesondere für eine Überlagerung des ersten und zweiten Signals und/oder eine Beeinflussung der Signale untereinander, spezifisch ist.

Dies ermöglicht eine besonders effektive Ermittlung der Eigenart des Geräts. Hier ist es denkbar, dass das erste und zweite Signal von gleichem Typ sind (z. B. beide akustische Signale) oder von unterschiedlichem Typ sind (z. B. ein Schallsignal und ein optisches Signal). Damit kann auch für unterschiedliche tragbare Geräte ein solches Verfahren genutzt werden, welches besonders signifikante Ergebnisse liefert.

Vorteilhafterweise kann im Rahmen der Erfindung vorgesehen sein, dass
- bei Schritt a) ein Lautsprecher des tragbaren Geräts und/oder des externen Geräts als die Individualisierungskomponente angesteuert wird, um gemäß einer (vorgespeicherten) Vorgabe ein Schallsignal zur Erzeugung der Geräteinformation auszugeben, und
- vorzugsweise zumindest tlw. gleichzeitig wenigstens eine weitere Individualisierungskomponente des tragbaren Geräts und/oder des externen Geräts gemäß der Vorgabe angesteuert wird, vorzugsweise ein Vibrationsgeber, um das Schallsignal in definierter Weise zu beeinflussen, und
- bei Schritt b) das, insbesondere beeinflusste, Schallsignal als das Korrelationssignal erfasst wird, vorzugsweise durch ein Mikrofon des tragbaren Geräts und/oder des externen Geräts als die Erfassungskomponente, und/oder eine Auswirkung der zumindest tlw. gleichzeitigen Ansteuerung der ersten und der wenigstens einen weiteren Individualisierungskomponente, insbesondere über einen Gyrosensor, vorzugsweise des tragbaren und/oder des externen Geräts, erfasst wird, um das Korrelationssignal zu bestimmen,
- bevorzugt bei Schritt c) ein Unterschied des erfassten Korrelationssignals zur Vorgabe ausgewertet wird, um ein Korrelationsmerkmal zu bestimmen, wodurch die gerätefeste Eigenart identifiziert wird.

Bspw. kann das Signal des Gyrosensors oder des Mikrofons direkt durch das Fahrzeug als Korrelationssignal erfasst werden, oder zunächst durch das tragbare Gerät und/oder das externen Geräts erfasst, ggf. weiterverarbeitet und/oder verschlüsselt und/oder (zwischen-) gespeichert, und dann an das Fahrzeug und/oder ein externes Gerät als Korrelationssignal übermittelt werden. Auch kann es möglich sein, dass ein Zeitstempel bei dem Korrelationssignal und/oder bei der Zwischenspeicherung genutzt wird, um ein unbefugtes Kopieren des Korrelationssignals zu verhindern.

Ferner kann im Rahmen der Erfindung vorgesehen sein, dass wenigstens drei Komponenten des tragbaren Geräts vorgesehen sind, durch welche jeweils eine Primärfunktion des tragbaren Geräts bereitgestellt wird, wobei vorzugsweise durch wenigstens zwei der Komponenten als die Individualisierungskomponenten die Erzeugung jeweiliger Geräteinformationen gemäß Schritt a) als jeweilige Sekundärfunktion durchgeführt wird, und bevorzugt durch wenigstens eine weitere der Komponenten als die Erfassungskomponente das Erfassen gemäß Schritt b) als Sekundärfunktion durchgeführt wird. In anderen Worten können bestehende Komponenten des tragbaren Geräts genutzt werden, um die Geräteinformation zu erzeugen und/oder die Erfassung des Korrelationssignals durchzuführen. Es müssen also keine neuen Komponenten bei dem Gerät vorgesehen werden, um das erfindungsgemäße Verfahren durchzuführen. Hierdurch können Kosten und Bauraum gespart werden.

Vorzugsweise kann vorgesehen sein, dass gemäß Schritt b) das Korrelationssignal ausschließlich extern vom (d. h. in Bezug auf das) tragbare(n) Gerät, insbesondere fahrzeugseitig und/oder durch eine Datenverarbeitungsanlage, erfasst wird, und vorzugsweise gemäß Schritt c) das Auswerten ausschließlich extern und/oder fahrzeugseitig durchgeführt wird, vorzugsweise durch eine externe Datenverarbeitungsanlage. Dies ermöglicht eine weitere Verbesserung der Sicherheit, da eine Kompromittierung des tragbaren Geräts nicht die Sicherheit beeinträchtigen kann. Es ist dabei denkbar, dass das Auswerteergebnis von der externen Datenverarbeitungsanlage vernetzt an das Fahrzeug und/oder an eine Auswertevorrichtung und/oder an das tragbare Gerät übertragen wird, um die Sicherheitsfunktion anhand des Auswerteergebnisses zu aktivieren.

Ein weiterer Vorteil im Rahmen der Erfindung ist erzielbar, wenn die gerätefeste Eigenart eine Geräteanomalie des tragbaren Geräts ist, welche vorzugsweise unkopierbar ausgeführt ist. Bei einer solchen Geräteanomalie handelt es sich z. B. um Abweichungen unterschiedlicher Geräte. Auch Geräte gleichen Typs können diese Abweichung untereinander aufweisen und damit anhand der Abweichung unterscheidbar sein. Damit wird die Sicherheit beim Betrieb des Sicherheitssystems deutlich erhöht werden.

In einer weiteren Möglichkeit kann vorgesehen sein, dass die wenigstens eine erzeugte Geräteinformation eine Information bei einem aktiv ausgesendeten Signal, vorzugsweise Schall- oder Funksignal, ist. Dies ermöglicht eine besonders sichere Erzeugung der Geräteinformation, da ausgesendete Signale nicht kopierbar sind.

Weiter ist im Rahmen der Erfindung denkbar, dass die wenigstens eine erzeugte Geräteinformation für eine zufällige Geräteeigenschaft des tragbaren Geräts spezifisch ist, und vorzugsweise von Herstellungsabweichungen und/oder einem Alterungsprozess bei dem tragbaren Gerät abhängig ist. Damit wird eine Kopierbarkeit der gerätespezifischen Eigenart praktisch unmöglich.

Es kann im Rahmen der Erfindung vorgesehen sein, dass das Korrelationssignal anhand wenigstens zwei oder wenigstens drei oder wenigstens vier oder wenigstens fünf unterschiedlichen Geräteinformationen unterschiedlicher Individualisierungskomponenten erzeugt wird, vorzugsweise anhand einer Überlagerung von unterschiedlichen Auswirkungen und/oder Signalen der Individualisierungskomponenten. Damit kann sich ggf. die Auswirkung der gerätefesten Eigenart erhöhen, und somit leichter das Korrelationsmerkmal bestimmt werden, um die gerätefeste Eigenart zu identifizieren.

Von weiterem Vorteil kann vorgesehen sein, dass bei Schritt c), insbesondere fahrzeugseitig und/oder durch das externe Gerät, ein Korrelationsmerkmal des Korrelationssignals bestimmt wird, und bei Schritt d) nur dann ein Aktivieren der Sicherheitsfunktion erfolgt, wenn das Korrelationsmerkmal positiv authentifiziert wird, bevorzugt durch einen Vergleich mit einer jeweiligen Authentifizierungsvorgabe. Bspw. kann hierzu eine kryptografisch gesicherte Vorgabe gespeichert sein, welche als Authentifizierungsvorgabe genutzt wird, z. B. hinterlegt in einem Datenspeicher des Fahrzeuges. Insbesondere kann der Datenspeicher auch hardwareseitig eine Kryptografie-Funktion aufweisen, z. B. zur Entschlüsselung, und somit als kryptografischer Datenspeicher ausgebildet sein. Dies erhöht die Geschwindigkeit und Sicherheit bei der Authentifizierung.

Des Weiteren kann vorgesehen sein, dass gemäß Schritt b) das Erfassen und/oder gemäß Schritt c) das Auswerten bereits durch das tragbare Gerät durchgeführt wird, vorzugsweise initiiert durch eine Annäherung an das Fahrzeug, und das Korrelationssignal und/oder das Auswerteergebnis zwischengespeichert wird, um es bevorzugt bei Aufforderung durch das Sicherheitssystem an das Sicherheitssystem zu übertragen. Bspw. kann hierzu durch das Sicherheitssystem detektiert werden, wenn das Fahrzeug in einen ersten Überwachungsbereich des Fahrzeuges eintritt (z. B. durch die Übermittlung eines Wecksignals). Diese Detektion kann dann ggf. die Ausführung zumindest von Schritt a) und/oder b) und/oder c) initiieren, sodass ggf. bereits eine Information für das Korrelationssignal oder das Korrelationssignal selbst bereitgestellt, vorzugsweise zwischengespeichert, wird. Alternativ oder zusätzlich kann die Ausführung auch manuell initiiert werden. Anschließend kann beim Eintreten in einen weiteren Überwachungsbereich (z. B. durch eine Annäherungsdetektion eines Annäherungssensors am Türgriff des Fahrzeuges) und/oder durch ein weiteres Ereignis die Übermittlung des Korrelationssignals und/oder der Information und/oder die Authentifizierung initiiert werden, ohne dass die Schritte a) und/oder b) und/oder c) noch zeitaufwendig durchgeführt werden müssen.

Ferner ist es optional vorgesehen, dass bei Schritt c) gemäß einer Gesamtanzahl wenigstens zwei oder wenigstens drei oder wenigstens vier unterschiedliche Korrelationsmerkmale des wenigstens einen Korrelationssignals bestimmt werden, und insbesondere bei Schritt d) nur dann ein Aktivieren der Sicherheitsfunktion erfolgt, wenn auch nur eine Mindestanzahl der Korrelationsmerkmale, z. B. wenigstens eines oder wenigstens zwei oder wenigstens drei der Korrelationsmerkmale, positiv authentifiziert wird, bevorzugt durch einen Vergleich mit einer jeweiligen Authentifizierungsvorgabe, wobei besonders bevorzugt die Mindestanzahl 50% oder 70% oder 80% oder 90% der Gesamtanzahl beträgt. In anderen Worten kann zumindest ein Korrelationsmerkmal mehr als notwendig genutzt werden, um eine Authentifizierung zur Aktivierung der sicherheitsrelevanten Funktion durchzuführen. Somit kann auch bei einer geringfügigen Veränderung des tragbaren Geräts (z. B. einer Beschädigung oder dergleichen), welche sich auf die gerätefeste Eigenart in geringfügiger Weise auswirkt, ggf. dennoch eine Authentifizierung stattfinden. Voraussetzung hierfür ist, dass durch die Veränderung lediglich ein Teil der genutzten Korrelationsmerkmale verändert wird. Um eine weitere Beeinträchtigung zu vermeiden, kann es möglich sein, dass in diesem Fall ein erneuter Anlernprozess initiiert wird, z. B. automatisch und/oder manuell ggf. nach Aufforderung.

Vorteilhaft ist es darüber hinaus, wenn bei Schritt b) wenigstens zwei oder wenigstens drei unterschiedliche Korrelationssignale für unterschiedliche gerätefeste Eigenarten erfasst werden, und entsprechend gemäß Schritt c) jeweils (separat und/oder unabhängig voneinander) ausgewertet werden, wobei vorzugsweise gemäß Schritt d) eine Aktivierung der Sicherheitsfunktion nur dann erfolgt, wenn ein jeweiliges Korrelationsmerkmal einer bestimmten Anzahl, bevorzugt jeder, der Korrelationssignale positiv authentifiziert wird, besonders bevorzugt durch einen Vergleich mit einer jeweiligen Authentifizierungsvorgabe. In anderen Worten können verschiedene Korrelationssignale erzeugt und/oder übermittelt und/oder erfasst werden, was die (Ausfall-) Sicherheit und Zuverlässigkeit und insbesondere auch die Fehlertoleranz deutlich erhöhen kann. Die bestimmte Anzahl entspricht bspw. der Gesamtanzahl der genutzten Korrelationssignale, ggf. um eins oder zwei oder drei reduziert, um so einen Grad der Fehlertoleranz zu bestimmen.

Bspw. kann dabei jedes der Korrelationsmerkmale unabhängig voneinander bestimmt und/oder erzeugt werden, z. B. auf der Grundlage unterschiedlicher Korrelationssignale.

Alternativ oder zusätzlich betrifft jedes der Korrelationssignale eine unterschiedliche Auswirkung der (zumindest tlw.) gleichzeitigen Ansteuerung von Individualisierungskomponenten. In anderen Worten kann eine erste zumindest tlw. gleichzeitige Ansteuerung unterschiedlicher Individualisierungskomponenten gemäß Schritt a) und/oder eine Erfassung gemäß Schritt b) zur Erzeugung eines ersten Korrelationsmerkmals erfolgen, eine zweite zumindest tlw. gleichzeitige Ansteuerung unterschiedlicher Individualisierungskomponenten gemäß Schritt a) und/oder Erfassung gemäß Schritt b) zur Erzeugung eines zweiten Korrelationsmerkmals erfolgen, eine dritte zumindest tlw. gleichzeitige Ansteuerung unterschiedlicher Individualisierungskomponenten gemäß Schritt a) und/oder Erfassung gemäß Schritt b) zur Erzeugung eines dritten Korrelationsmerkmals erfolgen, usw. Dabei kann es vorgesehen sein, dass die erste und/oder zweite und/oder dritte Ansteuerung usw. nicht gleichzeitig erfolgt, um die unterschiedlichen Korrelationsmerkmale unabhängig voneinander zu erzeugen.

Es kann ein Initiierungsprozess vorgesehen sein, um eine Vorgabe (Authentifizierungsvorgabe) durch das Fahrzeug und/oder ein externes Gerät zu bestimmen, welche zur Auswertung gemäß Schritt c) und/oder Aktivierung gemäß Schritt d) dient. Bspw. wird das wenigstens eine Korrelationssignal und/oder wenigstens ein Korrelationsmerkmal mit dieser Vorgabe verglichen, um die Authentifizierung des tragbaren Geräts durchzuführen. Insbesondere wird somit durch den Initiierungsprozess als einen vollständigen Anlernprozess die gerätefeste Eigenart angelernt und anhand der Vorgabe identifizierbar. Bspw. kann hierzu wenigstens ein Korrelationsmerkmal und/oder sämtliche für die Authentifizierung genutzten Korrelationsmerkmale bestimmt werden und als Vorlage hinterlegt werden, z. B. verschlüsselt und/oder in einem Datenspeicher des Fahrzeuges.

Ferner kann im Rahmen der Erfindung vorgesehen sein, dass bei Schritt d) nur dann ein Aktivieren der Sicherheitsfunktion erfolgt, wenn
- eine Gesamtanzahl der Korrelationsmerkmale positiv authentifiziert wird, und/oder
- eine Mindestanzahl der Korrelationsmerkmale positiv authentifiziert wird, wobei dann ein Anlernprozess initiiert wird, um die fehlerhaft authentifizierten Korrelationsmerkmale neu am Sicherheitssystem anzulernen.
Bspw. umfasst der Anlernprozess hierbei einen zumindest tlw. Initiierungsprozess, z. B. nur für das fehlerhaft authentifizierte Korrelationsmerkmal.

Des Weiteren ist es denkbar, dass bei erfolgloser Aktivierung gemäß Schritt d) eine Alternativauthentifizierung durchgeführt wird, bevorzugt unabhängig vom tragbaren Gerät, besonders bevorzugt anhand eines biometrischen Merkmals eines Benutzers des Fahrzeuges. Bspw. kann hierzu ein Fingerabdrucksensor des tragbaren Geräts genutzt werden, und vorzugsweise ein Ergebnis einer Erfassung des Fingerabdrucksensors an das Fahrzeug zur Authentifizierung übertragen werden.

Bevorzugt kann im Rahmen der Erfindung vorgesehen sein, dass eine jeweilige Authentifizierungsvorgabe für ein jeweiliges Korrelationsmerkmal durch einen Anlernprozess zur Identifizierung des tragbaren Geräts bestimmt und, bevorzugt ausschließlich, im Fahrzeug gespeichert wird, wobei besonders bevorzugt gemäß Schritt d) bei einer Abweichung wenigstens oder maximal eines der Korrelationsmerkmale von der jeweiligen Authentifizierungsvorgabe eine erneute Identifizierung des tragbaren Geräts angefordert wird, vorzugsweise durch eine Ausgabe eines Hinweises oder einer Fehlermeldung am tragbaren Gerät. Ein solcher Hinweis kann bspw. auf einer Anzeigevorrichtung, wie einem Touchscreen des tragbaren Geräts ausgegeben werden, oder ggf. auch durch eine akustische Fehlermeldung.

Gemäß einer vorteilhaften Weiterbildung der Erfindung kann vorgesehen sein, dass wenigstens zwei der nachfolgenden Signale gleichzeitig ausgesendet werden, um in einem gemeinsamen Wirkbereich der Signale das Korrelationssignal als Überlagerungssignal zu erzeugen:
- ein akustisches, insbesondere Schallsignal, vorzugsweise von einem Lautsprecher als Individualisierungskomponente,
- ein Funksignal, vorzugsweise von einem Funksender als Individualisierungskomponente,
- ein Vibrationssignal, vorzugsweise von einem Vibrationsgeber als Individualisierungskomponente,
- ein Lagesignal, vorzugsweise von einem Lagesensor als Individualisierungskomponente,
- ein optisches Signal, vorzugsweise von einem Touchscreen als Individualisierungskomponente.

Damit ist eine besonders fälschungssichere Erzeugung des Korrelationssignals möglich.

Vorzugsweise kann vorgesehen sein, dass die Geräteinformation wenigstens eine der nachfolgenden Informationen umfasst, welche anhand der wenigstens einen Individualisierungskomponente erzeugt werden, und welche vorzugsweise durch die Aussendung eines Signals durch wenigstens eine weitere Individualisierungskomponente beeinflusst werden:
- eine Geschwindigkeitsinformation, vorzugsweise durch einen Benchmark bei dem tragbaren Gerät, bevorzugt bei einem Prozessor und/oder einem Speicher und/oder einem Grafikprozessor jeweils als Individualisierungskomponente,
- eine Vergleichsinformation, vorzugsweise durch einen Vergleich und/oder anhand eines Benchmarks bei dem tragbaren Gerät ermittelt, bevorzugt anhand der Geschwindigkeitsinformation,
- eine Kapazitätsinformation, vorzugsweise eines Energiespeichers, bevorzugt eines Akkumulators des tragbaren Geräts als Individualisierungskomponente,
- eine Fehlerinformation, vorzugsweise bei wenigstens einer der Komponenten des tragbaren Geräts als Individualisierungskomponente des tragbaren Geräts.

Insbesondere kann die Vergleichsinformation anhand eines Vergleichs (Benchmarks) der Leistung der Individualisierungskomponente mit einer vorgegebenen Leistung (Referenz) und/oder der Leistung einer weiteren Individualisierungskomponente ermittelt werden, z. B. durch einen Geschwindigkeitsvergleich (z. B. Vergleich der Dauer einer Berechnung eines Prozessors als Individualisierungskomponente). Dadurch können vielseitige Möglichkeiten zur Ermittlung eines Korrelationssignals und/oder Identifizierung der Eigenart bereitgestellt werden.

Ebenfalls Gegenstand der Erfindung ist ein System zur Aktivierung einer Sicherheitsfunktion bei einem Sicherheitssystem, insbesondere eines Fahrzeuges, aufweisend:
- wenigstens eine Individualisierungskomponente (des tragbaren Geräts) zum Erzeugen wenigstens einer Geräteinformation (als eine Information) über eine gerätefeste Eigenart eines tragbaren Geräts, d. h. insbesondere, die Geräteinformation umfasst eine Information über die Eigenart,
- vorzugsweise: wenigstens eine Erfassungskomponente (z. B. des Fahrzeuges oder des tragbaren Geräts) zum Erfassen eines Korrelationssignals, wobei das Korrelationssignal für die wenigstens eine erzeugte Geräteinformation spezifisch ist,
- wenigstens ein externes Gerät und/oder wenigstens eine Auswertevorrichtung (z. B. des Fahrzeuges oder des tragbaren Geräts oder des externen Geräts) zum Auswerten eines erfassten Korrelationssignals, wobei bevorzugt das Korrelationssignal für die wenigstens eine erzeugte Geräteinformation spezifisch ist, um ein Auswerteergebnis zu bestimmen, wodurch die gerätefeste Eigenart identifizierbar ist, sodass vorzugsweise anhand des Auswerteergebnisses die Sicherheitsfunktion aktivierbar ist.

Damit bringt das erfindungsgemäße System die gleichen Vorteile mit sich, wie sie ausführlich mit Bezug auf ein erfindungsgemäßes Verfahren beschrieben worden sind. Zudem kann das System geeignet sein, gemäß einem erfindungsgemäßen Verfahren betrieben zu werden.

Insbesondere kann es möglich sein, dass das Korrelationssignal nicht im tragbaren Gerät ermittelt und/oder erfasst und/oder gespeichert wird, sondern ausschließlich außerhalb vom tragbaren Gerät, bspw. im Fahrzeug oder in einem externen Gerät. Dadurch kann verhindert werden, dass bei einem Klonen des tragbaren Geräts eine sicherheitsrelevante Information mitkopiert werden kann.

Die Auswertevorrichtung weist bspw. einen Prozessor und/oder einen Mikrocontroller und/oder dergleichen auf. Es sind unterschiedliche Ausführungen für die Auswertevorrichtung denkbar, bspw. als Fahrzeugelektronik, als Teil eines externen Geräts, wie einer Datenverarbeitungsanlage, oder auch als Teil des tragbaren Geräts. Es kann auch möglich sein, dass sowohl das externe Gerät als auch das Fahrzeug jeweils wenigstens eine Auswertevorrichtung aufweisen.

Bei einer Anordnung der Auswertevorrichtung im tragbaren Gerät, d. h. einer Auswertung (gemäß Schritt c)) durch das tragbare Gerät selbst, müssen ggf. weitere Sicherheitsvorkehrungen getroffen werden, damit ein Kopieren des Auswerteergebnisses nicht dazu führt, dass dieses zur Aktivierung der Sicherheitsfunktion genutzt werden kann.

Hierzu ist es ggf. denkbar, dass lediglich eine Zwischenspeicherung des Auswerteergebnisses genutzt wird. So kann das Auswerteergebnis bspw. nur für eine bestimmte Zeitdauer gespeichert werden, was durch einen Zeitstempel durch das (z. B. fahrzeugseitige) Sicherheitssystem geprüft werden kann. Hierzu wird der Zeitstempel und/oder das Auswerteergebnis bspw. kryptografisch gesichert.

Es kann möglich sein, dass die Schritte b) und/oder c) und/oder d) vollständig und/oder ausschließlich außerhalb des tragbaren Geräts durchgeführt werden. Damit kann vermieden werden, dass Daten über das Korrelationsmerkmal oder dergleichen auf dem tragbaren Gerät gespeichert sind.

Es kann vorteilhaft sein, wenn das Aktivieren der Sicherheitsfunktion auch durch eine Auswertevorrichtung in Abhängigkeit von dem Auswerteergebnis erfolgt. In diesem Fall initiiert die Auswertevorrichtung direkt die Aktivierung der Sicherheitsfunktion. Deshalb kann es von Vorteil sein, wenn die Auswertevorrichtung als Fahrzeugelektronik ausgebildet ist, um bspw. direkt ein Schließsystem des Fahrzeuges anzusteuern. Auch ist es denkbar, dass die Aktivierung der Sicherheitsfunktion vernetzt initiiert wird, sodass die Auswertevorrichtung z. B. Teil einer externen Datenverarbeitungsanlage (Server) ist.

Von Vorteil ist es, wenn die Sicherheitsfunktion eine sicherheitsrelevante Funktion des Fahrzeuges ist, wie z. B. die Entriegelung bei einem Schließsystem des Fahrzeuges. So kann die Sicherheitsfunktion z. B. zur Öffnung der Türen des Fahrzeuges dienen. Auch kann es möglich sein, dass die Sicherheitsfunktion das Starten des Motors des Fahrzeuges umfasst.

Dabei ist es besonders vorteilhaft, wenn das Aktivieren der Sicherheitsfunktion eine Authentifizierung voraussetzt und/oder impliziert. Die Authentifizierung dient zur Gewährleistung, dass nur der berechtigte Benutzer die Sicherheitsfunktion aktivieren kann. Hierzu wird bspw. das tragbare Gerät als Authentifizierungsmittel genutzt. In anderen Worten kann derjenige Benutzer, welcher das tragbare Gerät mit sich führt, auch die Sicherheitsfunktion aktivieren.

Um eine noch weitergehende Sicherheit bereitzustellen, also die Authentifizierung nicht nur mit dem tragbaren Gerät sondern auch bspw. mit dem Benutzer direkt zu verknüpfen, können weitere Authentifizierungsmittel vorgesehen sein, und Voraussetzung für die Aktivierung der Sicherheitsfunktion sein. Ein weiteres Authentifizierungsmittel ist bspw. ein Code, welcher durch den Benutzer z. B. am tragbaren Gerät eingegeben werden muss, oder ein biometrisches Merkmal, wie ein Fingerabdruck. Dieses weitere Authentifizierungsmittel kann dann ggf. auch durch das tragbare Gerät oder durch ein weiteres Gerät erfasst werden.

Als weitere verbessernde Maßnahme kann eine Individualisierungskomponente auch derart angesteuert werden, dass die Individualisierungskomponente durch wenigstens ein biometrisches Merkmal eines Benutzers beeinflusst wird. Bspw. wird ein Lagesensor des Geräts durch den Benutzer aufgrund seiner Handhabung des Geräts beeinflusst. Dieses für den Benutzer individuelle Merkmal kann dann ggf. ebenfalls zur Bestimmung eines Korrelationsmerkmals genutzt werden. Möglich ist auch eine Nutzung eines Benutzerverhaltens (ggf. einer statistischen Information) in Bezug auf das tragbare Gerät zur Generierung der Geräteinformation und/oder Beeinflussung der oder einer weiteren Individualisierungskomponente.

Es kann weiter möglich sein, dass das tragbare Gerät als ein tragbares Mobilfunkgerät, insbesondere Smartphone, ausgebildet ist, sodass das tragbare Gerät wenigstens eine Kommunikationsschnittelle zur Mobilfunkkommunikation aufweist, und vorzugsweise eine Datenkommunikation mit dem externen Gerät über die Mobilfunkkommunikation durchführbar ist, bevorzugt zum Übertragen des Korrelationssignal. Bspw. kann diese Kommunikationsschnittstelle zur Datenverbindung mit dem Fahrzeug und/oder einem externen Gerät dienen, um z. B. das Korrelationssignal zu übertragen.

Vorteilhafterweise ist bei dem erfindungsgemäßen System vorgesehen, dass das tragbare Gerät und das externe Gerät zumindest tlw. über ein Netzwerksystem miteinander vernetzt verbunden sind (z. B. über ein Mobilfunknetz), um vorzugsweise Daten auszutauschen, welche für das Korrelationssignal spezifisch sind, wobei bevorzugt hierzu das tragbare Gerät und/oder das externe Gerät eine Netzwerkschnittstelle aufweisen. Damit kann zuverlässig die Auswertung anhand des Korrelationssignals durchgeführt werden, indem z. B. die ausgetauschten Daten analysiert werden.

Vorzugsweise kann vorgesehen sein, dass wenigstens zwei Komponenten des tragbaren Geräts vorgesehen sind, welche jeweils eine Primärfunktion des tragbaren Geräts bereitstellen, wobei eine erste der Komponenten als eine erste Individualisierungskomponente und wenigstens eine zweite der Komponenten als wenigstens eine zweite Individualisierungskomponente jeweils eine Sendefunktion als Sekundärfunktion aufweisen, um ein erstes und wenigstens ein zweites Signal mit einer jeweiligen Geräteinformation auszusenden. Bspw. dient eine der Individualisierungskomponenten als Lautsprecher primär zur akustischen Ausgabe bei dem tragbaren Gerät und nur sekundär zur Erzeugung der Geräteinformation. Insbesondere kann zur Erzeugung der Geräteinformation gemäß Schritt a) der Lautsprecher auch so angesteuert werden, dass das akustische Signal nicht für den Benutzer hörbar ist. In gleicher Weise kann ggf. auch generell die Ansteuerung gemäß Schritt a) in einer Weise erfolgen, dass dies bzw. die dabei erzeugten Signale für den Benutzer nicht wahrnehmbar sind. Dies erhöht den Komfort beim Betrieb des Systems deutlich.

Es kann ferner möglich sein, dass die wenigstens eine Individualisierungskomponente und/oder Erfassungskomponente jeweils als wenigstens eine der nachfolgenden Komponenten des tragbaren Geräts ausgebildet ist:
- eine Bluetooth-Schnittstelle, vorzugsweise eine Bluetooth-Low-Energy-Schnittstelle,
- eine NFC-Schnittstelle (NFC = Near Field Communication),
- eine Netzwerk-Schnittstelle, vorzugsweise eine WLAN-Schnittstelle (WLAN= Wireless Local Area Network),
- eine Kommunikationsschnittstelle, vorzugsweise eine Mobilfunkschnittstelle,
- eine Ortungsschnittstelle, vorzugsweise eine GPS-Schnittstelle (GPS = Global Positioning System),
- eine Akustikschnittstelle, vorzugsweise ein Lautsprecher,
- eine Ladeschnittstelle, vorzugsweise eine kabellose Ladeschnittstelle,
- eine Funkschnittstelle, vorzugsweise ein FM-Empfänger (FM=Frequenzmodulation),
- eine Infrarotschnittstelle, insbesondere eine IrDA Schnittstelle (IrDA = Infrared Data Association),
- ein Magnetometer,
- ein Gyrometer,
- ein Beschleunigungssensor,
- ein Photometer, vorzugsweise Luxmeter,
- ein Lichtsensor,
- ein Wärmesensor, vorzugsweise Thermometer,
- eine Eingabeschnittstelle, vorzugsweise eine Tastatur und/oder ein Touchscreen,
- ein Fingerdrucksensor,
- ein Kamerasensor,
- ein Mikrofon,
- ein Lautsprecher,
- ein Lagesensor, vorzugsweise ein Gyroskop,
- ein Vibrationsgeber,
- wenigstens ein Datenspeicher, z. B. mit Hardwaredaten und/oder Kennungen, wie bspw. eine Prozessorkennung oder dergleichen,
- ein lichtemittierendes Gerät, vorzugsweise eine Lampe und/oder ein Blitzlicht.

Damit können diejenigen Komponenten zur Erzeugung der Geräteinformation als Individualisierungskomponente ausgewählt werden, welche die deutlichste Beeinflussung durch die Eigenart aufweisen.

Ein weiterer Vorteil im Rahmen der Erfindung ist erzielbar, wenn die wenigstens eine Erfassungskomponente und/oder wenigstens eine weitere Individualisierungskomponente als wenigstens eine der nachfolgenden Komponenten des Fahrzeuges und/oder des externen Geräts ausgebildet ist:
- eine Funkschnittstelle, vorzugsweise eine RF- (Radio Frequency) und/oder LF- (Low Frequency) und/oder Bluetooth- und/oder Bluetooth-Low-Energy- und/oder WLAN- und/oder Mobilfunk- und/oder Ortungs-Schnittstelle,
- eine Akustikschnittstelle, vorzugsweise ein Mikrofon,
- ein Näherungssensor, vorzugsweise kapazitiver Sensor,
- ein Drucksensor, vorzugsweise Piezo-Sensor,
- ein Ultraschallsensor,
- ein Infrarotsensor,
- ein Gyrometer,
- eine Kamera.

Jeder dieser Komponenten kann also (entweder) eine Komponente des Fahrzeuges oder des externen Geräts sein, oder auch bei beiden vorhanden sein. Es kann ferner möglich sein, dass eine Individualisierungskomponente gleichzeitig die Erfassungskomponente ist (z. B. erfolgt bei einer Erfassung durch das Mikrofon gleichzeitig eine Beeinflussung der Erfassung aufgrund der gerätefesten Eigenart). Entsprechend kann gemäß Schritt a) eine der Komponenten des tragbaren Geräts sowohl als Individualisierungskomponente angesteuert werden (z. B. Erfassung durch das Mikrofon) als auch gemäß Schritt b) als Erfassungskomponente genutzt werden (z. B. durch die Bereitstellung des Erfassungssignals des Mikrofons, welches die Geräteinformation aufweist, da die gerätefeste Eigenart sich auf das Erfassungssignal auswirkt).

Ebenfalls Gegenstand der Erfindung ist ein Computerprogrammprodukt für ein tragbares Gerät zur Aktivierung einer Sicherheitsfunktion bei einem Sicherheitssystem, insbesondere eines Fahrzeuges. Hierbei ist insbesondere vorgesehen, dass das Computerprogrammprodukt dazu ausgeführt ist, das tragbare Gerät zur Durchführung wenigstens einer der nachfolgenden Schritte, und/oder wenigstens einer der Schritte eines erfindungsgemäßen Verfahrens, anzusteuern, und vorzugsweise Befehle umfasst, die bei der Ausführung des Computerprogrammprodukts durch das tragbare Gerät dieses veranlassen, wenigstens einer der nachfolgenden Schritte, und/oder wenigstens einer der Schritte eines erfindungsgemäßen Verfahrens, auszuführen:
a) Ansteuern wenigstens einer Komponente des tragbaren Geräts als Individualisierungskomponente zur Erzeugung wenigstens einer Geräteinformation (als eine Information) über eine gerätefeste Eigenart des tragbaren Geräts,
b) Erfassen eines Korrelationssignals, vorzugsweise durch eine Erfassungskomponente des tragbaren Geräts und/oder des externen Geräts, wobei das Korrelationssignal für die wenigstens eine erzeugte Geräteinformation spezifisch ist,
c) Übersenden des erfassten Korrelationssignals an das externe Gerät, um eine Auswertung des Korrelationssignals durch das externe Gerät zur Identifizierung der gerätefesten Eigenart durchzuführen.

Damit bringt das erfindungsgemäße Computerprogrammprodukt die gleichen Vorteile mit sich, wie sie ausführlich mit Bezug auf ein erfindungsgemäßes Verfahren und erfindungsgemäßes System beschrieben worden sein. Die Identifizierung der gerätefesten Eigenart kann bspw. durch eine Auswertung gemäß einem erfindungsgemäßen Verfahren anhand des Korrelationssignals erfolgen, z. B. mittels einer Mustererkennung und/oder statistischen Analyse oder dergleichen. Bspw. ist das Computerprogrammprodukt als Computerprogramm und/oder Firmware und/oder dergleichen ausgeführt. Weiter kann das Computerprogrammprodukt auf einem computerlesbaren Speichermedium gespeichert sein, welches ebenfalls unter Schutz gestellt ist.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Darstellung eines erfindungsgemäßen Systems,
- Figur 2: eine weitere schematische Darstellung eines erfindungsgemäßen Systems,
- Figur 3: eine schematische Darstellung zur Visualisierung eines erfindungsgemäßen Verfahrens.

In den nachfolgenden Figuren werden für die gleichen technischen Merkmale auch von unterschiedlichen Ausführungsbeispielen die identischen Bezugszeichen verwendet.

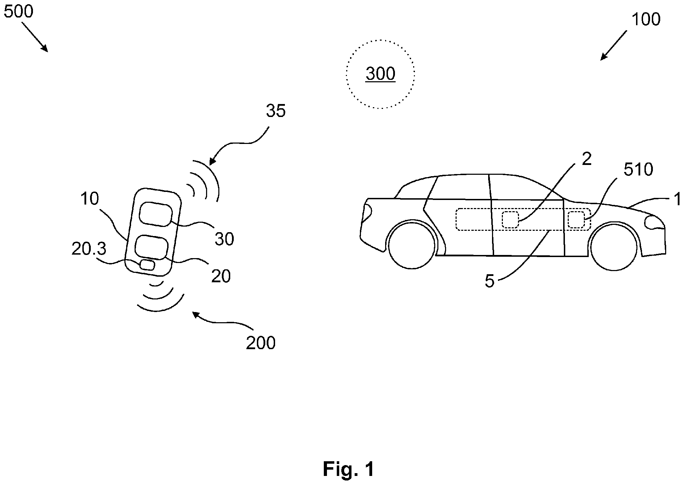

In Figur 1 ist schematisch ein erfindungsgemäßes Verfahren 100 visualisiert sowie ein erfindungsgemäßes System 500 schematisch dargestellt. Es ist ein Fahrzeug 1 gezeigt, welches bspw. ein Schließsystem 2 und/oder ein Sicherheitssystem 5 umfasst. Des Weiteren kann eine Auswertevorrichtung 510 beim Fahrzeug 1, z. B. einer Fahrzeugelektronik, und/oder bei einem externen Gerät 300 vorgesehen sein.

Des Weiteren kann ein tragbares Gerät 10 zur Authentifizierung beim Fahrzeug 1 und/oder bei einem externen Gerät 300, z. B. einer Datenverarbeitungsanlage 300, genutzt werden. Vorteilhafterweise ist hierzu eine Kommunikation über eine Kommunikationsschnittstelle 30 des tragbaren Geräts 10 durch die Aussendung eines Kommunikationssignals 35 möglich. Auch ist es denkbar, dass das Kommunikationssignal 35 und/oder die Kommunikationsschnittstelle 30 lediglich unabhängig vom Fahrzeug 1 und/oder vom Sicherheitssystem 5 nur zur Mobilfunkkommunikation eingesetzt wird.

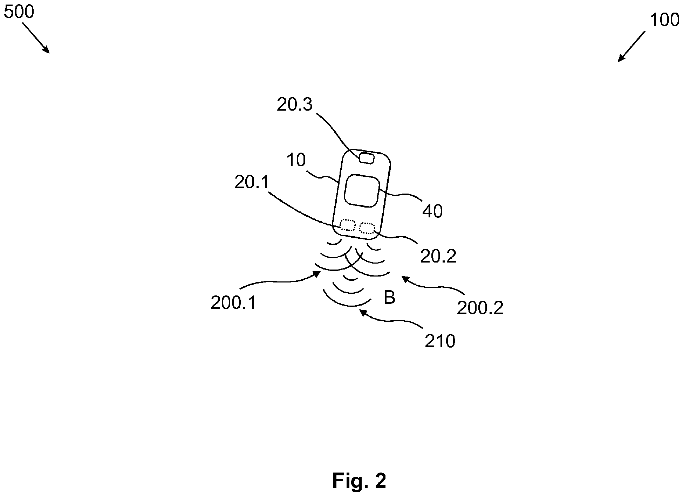

Zur Ermöglichung einer sicheren Authentifizierung kann das tragbare Gerät 10 zumindest eine Komponente 20 aufweisen, welche (jeweils) als Individualisierungskomponente 20 und/oder als Erfassungskomponente 20 gemäß einem erfindungsgemäßen Verfahren 100 genutzt werden kann. So kann bspw. eine erste Individualisierungskomponente 20.1, eine zweite Individualisierungskomponente 20.2 und eine Erfassungskomponente 20.3 beim tragbaren Gerät 10 vorgesehen sein, wie auch in Figur 2 veranschaulicht ist.

In Figur 2 ist ferner dargestellt, dass das tragbare Gerät 10 auch eine Anzeigevorrichtung 40, bspw. einen Touchscreen, aufweisen kann, z. B. zur Ausgabe eines Hinweises an einen Benutzer. Darüber hinaus ist gezeigt, dass eine erste Individualisierungskomponente 20.1 und eine zweite Individualisierungskomponente 20.2 gemäß einem erfindungsgemäßen Verfahren 100 derart angesteuert werden kann, dass jeweilige Signale 200 ausgegeben werden. Es kann sich dann ein erstes Signal 200.1 und ein zweites Signal 200.2 in einem Wirkbereich B beeinflussen, wodurch ein Korrelationssignal 210 entstehen kann. Diese Möglichkeit zur Erzeugung einer Geräteinformation 200 ist rein beispielhaft, sodass bspw. auch andere Individualisierungskomponenten 20 eingesetzt werden können, und ggf. auch anstelle eines Signals 200 eine Information bei den Individualisierungskomponenten durch eine Berechnung und/oder Messung ermittelt werden kann.

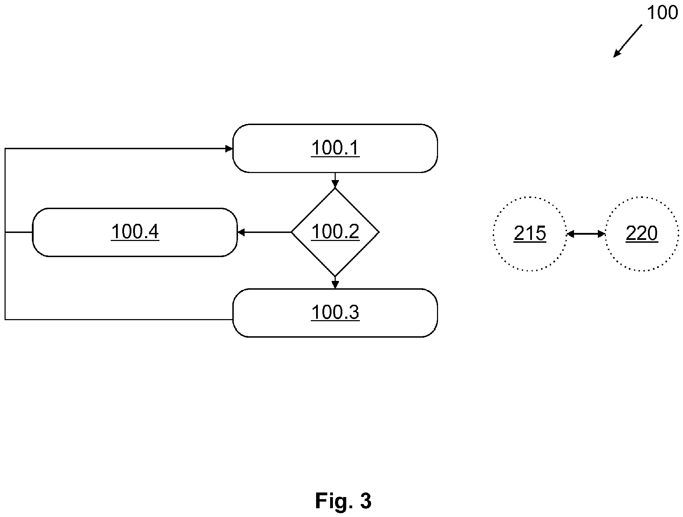

In Figur 3 wird ein erfindungsgemäßes Verfahren 100 weiter veranschaulicht. Es ist erkennbar, dass anhand einer Korrelationsvorgabe 220 ein Korrelationsmerkmal 215 bestimmt werden kann, bspw. durch eine Auswertung, wie einen Vergleich des Korrelationssignals 210 mit der Korrelationsvorgabe 220 oder dergleichen. Gemäß einem ersten Verfahrensschritt 100.1 kann dabei wenigstens eine Komponente 20 des tragbaren Geräts 10 als Individualisierungskomponente 20 zur Erzeugung wenigstens einer Geräteinformation 200 über eine gerätefeste Eigenart des tragbaren Geräts 10 angesteuert werden. Gemäß einem zweiten Verfahrensschritt 100.2 kann ein Korrelationssignal 210 erfasst und ausgewertet werden, um ein Auswerteergebnis zu bestimmen. In Abhängigkeit von dem Auswerteergebnis kann dann gemäß einem dritten Verfahrensschritt 100.3 eine Sicherheitsfunktion bei einem Sicherheitssystem 5 aktiviert werden (z. B. bei erfolgreicher Authentifizierung), oder gemäß einem vierten Verfahrensschritt 100.4 die Aktivierung der Sicherheitsfunktion, z. B. bei erfolgloser Authentifizierung, ausbleiben. Die Sicherheitsfunktion ist z. B. eine Ansteuerung des Schließsystems 2 zur Entriegelung des Fahrzeuges 1.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Fahrzeug
- 2: Schließsystem
- 5: Sicherheitssystem
- 10: tragbares Gerät, ID-Geber, Smartphone

- 20: Individualisierungskomponente, Komponente, Erfassungskomponente
- 20.1: erste Individualisierungskomponente, erste Komponente
- 20.2: zweite Individualisierungskomponente, zweite Komponente
- 20.3: Erfassungskomponente, dritte Komponente

- 30: Kommunikationsschnittstelle
- 35: Kommunikationssignal

- 40: Anzeigevorrichtung, Display, Touchscreen

- 100: Verfahren

- 200: Signal, Geräteinformation
- 200.1: erstes Signal, erste Geräteinformation
- 200.2: zweites Signal, zweite Geräteinformation
- 210: Korrelationssignal
- 215: Korrelationsmerkmal
- 220: Korrelationsvorgabe

- 300: externes Gerät, Datenverarbeitungsanlage, Server

- 500: System
- 510: Auswertevorrichtung

- B: Wirkbereich

## Patentansprüche

1. Verfahren (100) zur Aktivierung einer Sicherheitsfunktion bei einem Sicherheitssystem (5), insbesondere eines Fahrzeuges (1), mit einem tragbaren Gerät (10) und einem separat davon ausgeführten externen Gerät (300),
**wobei die nachfolgenden Schritte durchgeführt werden:**
a) Ansteuern wenigstens einer Komponente (20) des tragbaren Geräts (10) als Individualisierungskomponente (20) zur Erzeugung wenigstens einer Geräteinformation (200) über eine gerätefeste Eigenart des tragbaren Geräts (10),
b) Erfassen eines Korrelationssignals (210), wobei das Korrelationssignal (210) für die wenigstens eine erzeugte Geräteinformation (200) spezifisch ist,
c) Auswerten des erfassten Korrelationssignals (210) durch das externe Gerät (300) zur Bestimmung eines Auswerteergebnisses, um die gerätefeste Eigenart zu identifizieren,
d) Aktivieren der Sicherheitsfunktion in Abhängigkeit von dem Auswerteergebnis.

2. Verfahren (100) nach Anspruch 1,
**dadurch gekennzeichnet,**
**dass** das gemäß Schritt b) erfasste Korrelationssignal (210) vernetzt an das externe Gerät (300) übertragen wird, um gemäß Schritt c) das übertragene erfasste Korrelationssignal (210) auszuwerten, wobei das Auswerteergebnis vernetzt an das Sicherheitssystem (5) übertragen wird, um die Sicherheitsfunktion gemäß Schritt d) in Abhängigkeit von dem übertragenen Auswerteergebnis zu aktivieren.

3. Verfahren (100) nach Anspruch 1 oder 2,
**dadurch gekennzeichnet,**
**dass** das externe Gerät (300) als stationäre Datenverarbeitungsanlage (300) ausgebildet ist, welche das Auswerten gemäß Schritt c) anhand einer Verarbeitung des Korrelationssignals (210) in Abhängigkeit von Vergleichsinformationen durchführt, wobei die Vergleichsinformationen hierzu durch die Datenverarbeitungsanlage (300) aus einer Datenbank ausgelesen werden
und/oder dass ausschließlich extern vom tragbaren Gerät (10), insbesondere ausschließlich im externen Gerät (300) und/oder durch das Sicherheitssystem (5), entschieden wird, ob die Sicherheitsfunktion gemäß Schritt d) aktiviert wird.

4. Verfahren (100) nach einem der vorhergehenden Ansprüche,
**dadurch gekennzeichnet,**
**dass** das gemäß Schritt b) erfasste Korrelationssignal (210) kryptografisch gesichert, vorzugsweise verschlüsselt, an das externe Gerät (300) übertragen wird, und gemäß Schritt c) das übertragene erfasste Korrelationssignal (210) vor der Auswertung kryptografisch entsichert, vorzugsweise entschlüsselt, wird, wobei das Auswerteergebnis kryptografisch gesichert an das Sicherheitssystem (5) übertragen wird, um die Sicherheitsfunktion gemäß Schritt d) in Abhängigkeit von dem übertragenen Auswerteergebnis zu aktivieren
und/oder dass neben dem gemäß Schritt b) erfassten Korrelationssignal (210) eine Zusatzinformation über das tragbare Gerät (10) und/oder über das Sicherheitssystem (5) an das externe Gerät (300) übertragen wird, wobei das externe Gerät (300) die Auswertung gemäß Schritt c) anhand der Zusatzinformation durchführt.

5. Verfahren (100) nach einem der vorhergehenden Ansprüche,
**dadurch gekennzeichnet,**
**dass** in Abhängigkeit von einer übertragenen Zusatzinformation das externe Gerät (300) zumindest eine der nachfolgenden Auswahlen durchführt:
- Auswahl einer Schlüsselinformation, welche für das tragbare Gerät (10) und/oder das Sicherheitssystem (5) spezifisch ist, um das Korrelationssignal (210) zu entschlüsseln,
- Auswahl einer kryptografischen Information, welche für das tragbare Gerät (10) und/oder das Sicherheitssystem (5) spezifisch ist, um das Korrelationssignal (210) kryptografisch zu entsichern,
- Auswahl einer Analysemethode, um das Korrelationssignal (210) mittels der ausgewählten Analysemethode auszuwerten,
- Auswahl wenigstens einer Vergleichsinformation, um das Korrelationssignal (210) anhand der wenigstens einen Vergleichsinformation auszuwerten.

6. Verfahren (100) nach einem der vorhergehenden Ansprüche,
**dadurch gekennzeichnet,**
**dass** das Korrelationssignal (210) gemäß Schritt b) durch das externe Gerät (300) erfasst wird, wobei die Erfassung gemäß wenigstens einer der nachfolgenden Möglichkeiten erfolgt:
- Bestimmen von technischen Charakteristika einer Kommunikation, insbesondere einer Datenübertragung, zwischen dem tragbaren Gerät (10) und dem externen Gerät (300), wobei die Individualisierungskomponente (20) als eine Komponente des tragbaren Geräts (10) zur Kommunikation, vorzugsweise als eine Netzwerkschnittstelle, ausgebildet ist,
- Bestimmen von technischen Charakteristika eines akustischen Signals, wobei die Individualisierungskomponente (20) als eine Komponente des tragbaren Geräts (10) zur Aussendung des akustischen Signals ausgebildet ist,
- Bestimmen von technischen Charakteristika eines optischen Signals, wobei die Individualisierungskomponente (20) als eine Komponente des tragbaren Geräts (10) zur Aussendung des optischen Signals ausgebildet ist.

7. Verfahren (100) nach einem der vorhergehenden Ansprüche,
**dadurch gekennzeichnet,**
**dass** bei Schritt a) die nachfolgenden Schritte durchgeführt werden:
- Erstes Ansteuern einer ersten Komponente (20.1) des tragbaren Geräts (10) als eine erste Individualisierungskomponente (20.1),
- Zweites Ansteuern wenigstens einer zweiten Komponente (20.2) des tragbaren Geräts (10) und/oder des externen Geräts (300) als wenigstens eine zweite Individualisierungskomponente (20.2), wobei das zweite Ansteuern zumindest teilweise gleichzeitig zum ersten Ansteuern erfolgt,
- Erfassen einer Auswirkung des gleichzeitigen Ansteuerns, insbesondere durch das tragbare Gerät (10) und/oder das externe Gerät (300) und/oder das Fahrzeug (1), um die Geräteinformation (200) zu erzeugen,
und wobei der nachfolgende Schritt bei Schritt b) durchgeführt wird:
- Ansteuern einer Erfassungskomponente (20.3) zur Erfassung des Korrelationssignals (210), wobei das Korrelationssignal (210) für die Überlagerung des ersten und zweiten Ansteuerns spezifisch ist, wobei vorzugsweise die Erfassungskomponente (20.3) eine Komponente des tragbaren Geräts (10) und/oder des externen Geräts (300) und/oder des Fahrzeugs (1) ist.

8. Verfahren (100) nach einem der vorhergehenden Ansprüche,
**dadurch gekennzeichnet,**
**dass** das Ansteuern gemäß Schritt a) in Abhängigkeit von einer Vorgabe erfolgt, und bei Schritt c) der nachfolgende Schritt durchgeführt wird:
- Auswerten des erfassten Korrelationssignals (210) dadurch, dass eine Abweichung des Korrelationssignals (210) zur Vorgabe identifiziert wird, insbesondere anhand einer Vergleichsinformation, um ein Korrelationsmerkmal (215) des Korrelationssignals (210) zu bestimmen, wobei das Korrelationsmerkmal (215) mit der gerätefesten Eigenart korreliert ist,
und **dass** bei Schritt d) der nachfolgende Schritt durchgeführt wird:
- Aktivieren der Sicherheitsfunktion in Abhängigkeit von dem Korrelationsmerkmal (215) des Korrelationssignals (210), wobei vorzugsweise das Aktivieren durch das Fahrzeug (1) und/oder durch das tragbare Gerät (300) erfolgt.

9. Verfahren (100) nach einem der vorhergehenden Ansprüche,
**dadurch gekennzeichnet,**
**dass**
- bei Schritt a) ein Lautsprecher des tragbaren Geräts (10) als die Individualisierungskomponente (20) angesteuert wird, um gemäß einer Vorgabe ein Schallsignal zur Erzeugung der Geräteinformation (200) auszugeben, und
- vorzugsweise zumindest teilweise gleichzeitig wenigstens eine weitere Individualisierungskomponente (20) des tragbaren Geräts (10) und/oder des externen Geräts (300) gemäß der Vorgabe angesteuert wird, vorzugsweise ein Vibrationsgeber, um das Schallsignal in definierter Weise zu beeinflussen, und
- bei Schritt b) das, insbesondere beeinflusste, Schallsignal als das Korrelationssignal (210) erfasst wird, vorzugsweise durch ein Mikrofon des tragbaren Geräts (10) und/oder des externen Geräts (300) als eine Erfassungskomponente (20.3), und/oder eine Auswirkung der zumindest teilweise gleichzeitigen Ansteuerung der ersten und der wenigstens einen weiteren Individualisierungskomponente (20), insbesondere über einen Gyrosensor des tragbaren Geräts (10) und/oder des externen Geräts (300), erfasst wird, um das Korrelationssignal (210) zu bestimmen,
- bei Schritt c) ein Unterschied des erfassten Korrelationssignals (210) zur Vorgabe ausgewertet wird, um ein Korrelationsmerkmal (215) zu bestimmen, wodurch die gerätefeste Eigenart identifiziert wird.

10. Verfahren (100) nach einem der vorhergehenden Ansprüche,
**dadurch gekennzeichnet,**
**dass** die gerätefeste Eigenart eine Geräteanomalie des tragbaren Geräts (10) ist, und/oder
**dass** die wenigstens eine erzeugte Geräteinformation (200) eine Information bei einem aktiv ausgesendeten Signal (200), vorzugsweise Schall- oder Funksignal, ist und/oder dass die wenigstens eine erzeugte Geräteinformation (200) für eine zufällige Geräteeigenschaft des tragbaren Geräts (10) spezifisch ist, und vorzugsweise von Herstellungsabweichungen und/oder einem Alterungsprozess bei dem tragbaren Gerät (10) abhängig ist
und/oder dass bei Schritt c) durch das externe Gerät (300) ein Korrelationsmerkmal (215) des Korrelationssignals (210) bestimmt wird, und bei Schritt d) nur dann ein Aktivieren der Sicherheitsfunktion erfolgt, wenn das Korrelationsmerkmal (215) positiv authentifiziert wird, bevorzugt durch einen Vergleich mit einer jeweiligen Authentifizieru ngsvorgabe.

11. System (500) zur Aktivierung einer Sicherheitsfunktion bei einem Sicherheitssystem (5), insbesondere eines Fahrzeuges (1), aufweisend:
- wenigstens eine Individualisierungskomponente (20) zum Erzeugen wenigstens einer Geräteinformation (200) über eine gerätefeste Eigenart eines tragbaren Geräts (10),
- wenigstens ein externes Gerät (300) zum Auswerten eines erfassten Korrelationssignals (210), wobei das Korrelationssignal (210) für die wenigstens eine erzeugte Geräteinformation (200) spezifisch ist, um ein Auswerteergebnis zu bestimmen, wodurch die gerätefeste Eigenart identifizierbar ist, sodass anhand des Auswerteergebnisses die Sicherheitsfunktion aktivierbar ist.

12. System (500) nach einem der vorhergehenden Ansprüche,
**dadurch gekennzeichnet,**
**dass** das tragbare Gerät (10) als ein tragbares Mobilfunkgerät, insbesondere Smartphone (10), ausgebildet ist, sodass das tragbare Gerät (10) wenigstens eine Kommunikationsschnittstelle (30) zur Mobilfunkkommunikation aufweist, und vorzugsweise eine Datenkommunikation mit dem externen Gerät (300) über die Mobilfunkkommunikation durchführbar ist, bevorzugt zum Übertragen des Korrelationssignals (210)
und/oder dass das tragbare Gerät (10) und das externe Gerät (300) zumindest teilweise über ein Netzwerksystem miteinander vernetzt verbunden sind, um vorzugsweise Daten auszutauschen, welche für das Korrelationssignal (210) spezifisch sind, wobei bevorzugt hierzu das tragbare Gerät (10) und/oder das externe Gerät (300) eine Netzwerkschnittstelle aufweisen.

13. System (500) nach einem der vorhergehenden Ansprüche,
**dadurch gekennzeichnet,**
**dass** die wenigstens eine Individualisierungskomponente (20) und/oder eine Erfassungskomponente (20) jeweils als wenigstens eine der nachfolgenden Komponenten (20) des tragbaren Geräts (10) und/oder des externen Geräts (300) ausgebildet ist:
- eine Bluetooth-Schnittstelle, vorzugsweise eine Bluetooth-Low-Energy-Schnittstelle,
- eine NFC-Schnittstelle,
- eine Netzwerk-Schnittstelle, vorzugsweise eine WLAN-Schnittstelle,
- eine Kommunikationsschnittstelle (30), vorzugsweise eine Mobilfunkschnittstelle,
- eine Ortungsschnittstelle, vorzugsweise eine GPS-Schnittstelle,
- eine Akustikschnittstelle, vorzugsweise ein Lautsprecher,
- eine Ladeschnittstelle, vorzugsweise eine kabellose Ladeschnittstelle,
- eine Funkschnittstelle, vorzugsweise ein FM-Empfänger,
- eine Infrarotschnittstelle, insbesondere eine IrDA Schnittstelle,
- ein Magnetometer,
- ein Gyrometer,
- ein Beschleunigungssensor,
- ein Photometer, vorzugsweise Luxmeter,
- ein Lichtsensor,
- ein Wärmesensor, vorzugsweise Thermometer,
- eine Eingabeschnittstelle, vorzugsweise eine Tastatur und/oder ein Touchscreen,
- ein Fingerdrucksensor,
- ein Kamerasensor,
- ein Mikrofon,
- ein Lautsprecher,
- ein Lagesensor, vorzugsweise ein Gyroskop,
- ein Vibrationsgeber,
- ein lichtemittierendes Gerät, vorzugsweise eine Lampe und/oder ein Blitzlicht.

14. System (500) nach einem der vorhergehenden Ansprüche,
**dadurch gekennzeichnet,**
**dass** wenigstens eine Erfassungskomponente (20) und/oder wenigstens eine weitere Individualisierungskomponente (20) als wenigstens eine der nachfolgenden Komponenten (20) des Fahrzeuges (1) und/oder des externe Geräts (300) ausgebildet ist:
- eine Funkschnittstelle, vorzugsweise eine RF- und/oder LF- und/oder Bluetooth- und/oder Bluetooth-Low-Energy- und/oder WLAN- und/oder Mobilfunk- und/oder Ortungs-Schnittstelle,
- eine Akustikschnittstelle, vorzugsweise ein Mikrofon,
- ein Näherungssensor, vorzugsweise kapazitiver Sensor,
- ein Drucksensor, vorzugsweise Piezo-Sensor,
- ein Ultraschallsensor,
- ein Infrarotsensor,
- ein Gyrometer,
- eine Kamera
und/oder dass das System (500) durch ein Verfahren (100) nach einem der vorhergehenden Ansprüche betreibbar ist.

15. Computerprogrammprodukt für ein tragbares Gerät (10) zur Aktivierung einer Sicherheitsfunktion bei einem Sicherheitssystem (5), insbesondere eines Fahrzeuges (1), wobei das Computerprogrammprodukt Befehle umfasst, die bei der Ausführung des Computerprogrammprodukts durch das tragbare Gerät (10) dieses zur Durchführung der nachfolgenden Schritte veranlasst:
a) Ansteuern wenigstens einer Komponente (20) des tragbaren Geräts (10) als Individualisierungskomponente (20) zur Erzeugung wenigstens einer Geräteinformation (200) über eine gerätefeste Eigenart des tragbaren Geräts (10),
b) Erfassen eines Korrelationssignals (210), wobei das Korrelationssignal (210) für die wenigstens eine erzeugte Geräteinformation (200) spezifisch ist,
c) Übersenden des erfassten Korrelationssignals (210) an das externe Gerät (300), um eine Auswertung des Korrelationssignals (210) durch das externe Gerät (300) zur Identifizierung der gerätefesten Eigenart durchzuführen
und/oder dass das Computerprogrammprodukt dazu ausgeführt ist, das tragbare Gerät (10) zur Durchführung eines Verfahrens (100) nach einem der vorhergehenden Ansprüche anzusteuern.
